# EUROPÄISCHE PATENTSCHRIFT

(11) **EP 3 227 057 B1**
(45) Veröffentlichungstag und Bekanntmachung des Hinweises auf die Patenterteilung: **18.07.2018**
(21) Anmeldenummer: 15804384.4
(22) Anmeldetag: 01.12.2015
(51) Int. Cl.: B25D 17/24, B25D 16/00

(54) **HANDWERKZEUGMASCHINE UND STEUERUNGSVERFAHREN DAFÜR**
HAND-HELD POWER TOOL AND CONTROL METHOD THEREFOR
MACHINE-OUTIL PORTATIVE ET PROCÉDÉ DE COMMANDE ASSOCIÉ

(30) Priorität: 03.12.2014 EP 14196017
(43) Veröffentlichungstag der Anmeldung: 11.10.2017
(73) Patentinhaber: HILTI Aktiengesellschaft, 9494 Schaan (LI)
(72) Erfinder: ONTL, Rainer, 86899 Landsberg am Lech (DE); KOHLSCHMIED, Frank, 80339 München (DE); DIEING, Christoph, 88316 Isny (DE)
(74) Vertreter: Hilti Aktiengesellschaft Corporate Intellectual Property
(86) Internationale Anmeldenummer: PCT/EP2015/078137
(87) Internationale Veröffentlichungsnummer: WO 2016/087405

(56) Entgegenhaltungen:
- EP-A1- 2 189 249
- DE-A1-102012 221 517
- US-A1- 2011 024 149
- US-A1- 2012 279 741
- US-A1- 2013 284 473

## Beschreibung

### GEBIET DER ERFINDUNG

Die vorliegende Erfindung betrifft ein Steuerungsverfahren für eine Handwerkzeugmaschine mit einem Tilger zum Dämpfen periodischer Schwingungen.

Eine Handwerkzeugmaschine gemäß dem Oberbegriff von Anspruch 1 ist aus DE 10 2012 221517 A1 bekannt.

US8434565 BB beschreibt einen Bohrhammer, dessen Schlagwerk einen Meißel mit einer Schlagfrequenz in einen Untergrund treibt. Die mit der Schlagfrequenz auftretenden Schwingungen werden durch einen Tilger gedämpft. Der Tilger hat einen frei aufgehängten Schwinger, der aus einer Ruhelage heraus längs der Schlagrichtung vor- und zurück schwingen kann. Federn treiben den Schwinger nach einer Auslenkung in die Ruhelage zurück. Die Masse des Schwingers und die Federstärke der Federn sind auf die Schlagfrequenz abgestimmt.

### OFFENBARUNG DER ERFINDUNG

Die erfindungsgemäße Handwerkzeugmaschine hat einen Werkzeughalter zum Haltern eines Werkzeugs auf einer Arbeitsachse. Ein Schlagwerk hat einen mit einer Schlagzahl periodisch auf der Arbeitsachse zwischen einem werkzeugnahen Wendepunkt und einem werkzeugfernen Wendepunkt bewegten Schläger. Eine Antriebssteuerung des Schlagwerks regelt die Schlagzahl auf einen Sollwert. Ein Tilger hat einen längs der Arbeitsachse um eine Ruhelage beweglichen Schwinger und ein oder mehrere den Schwinger in die Ruhelage rücktreibende Federn. Ein Sensor dient zum Ermitteln einer ersten Phase eines Kompressionspunkts des Schlagwerks. Ein weiterer Sensor dient zum Ermitteln einer zweiten Phase eines werkzeugnahen Umkehrpunkts des Tilgers. Eine Dämpfregelung passt den Sollwert so an, dass eine Phasendifferenz zwischen der ersten Phase und der zweiten Phase geringer als ein Schwellwert ist. Die Phasen sind die periodisch wiederkehrenden Zeitpunkte, an denen Schlagwerk maximal komprimiert Kompressionspunkt bzw. der Tilger am werkzeugnahen Umkehrpunkt ist.

### KURZE BESCHREIBUNG DER FIGUREN

Die nachfolgende Beschreibung erläutert die Erfindung anhand von exemplarischen Ausführungsformen und Figuren. In den Figuren zeigen:
- Fig. 1: einen Bohrhammer
- Fig. 2: die zyklische Bewegung eines pneumatischen Schlagwerks
- Fig. 3: die zyklische Bewegung eines angeregten Tilgers

Gleiche oder funktionsgleiche Elemente werden durch gleiche Bezugszeichen in den Figuren indiziert, soweit nicht anders angegeben.

### AUSFÜHRUNGSFORMEN DER ERFINDUNG

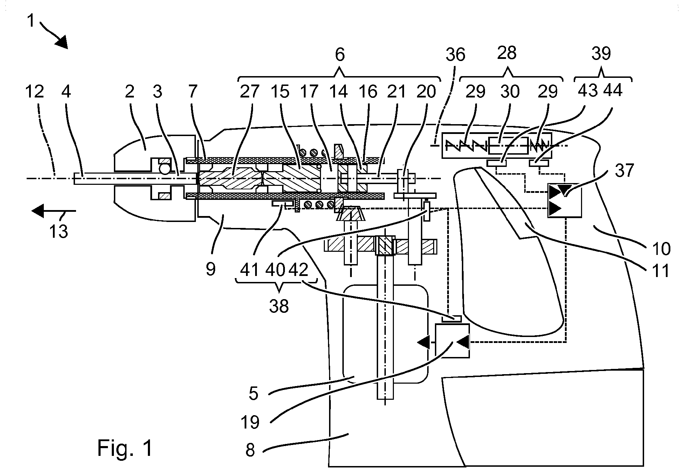

Fig. 1 zeigt als Beispiel einer Handwerkzeugmaschine schematisch einen Bohrhammer **1.** Der Bohrhammer **1** hat einen Werkzeughalter **2,** in welchen ein Schaftende **3** eines Werkzeug, z.B. eines des Bohrers **4,** eingesetzt werden kann. Einen primären Antrieb des Bohrhammers **1** bildet ein Motor **5,** welcher ein Schlagwerk **6** und eine Abtriebswelle **7** antreibt. Ein Batteriepaket **8** oder eine Netzleitung versorgt den Motor **5** mit Strom. Das pneumatische Schlagwerk **6** und vorzugsweise die weiteren Antriebskomponenten sind innerhalb eines Maschinengehäuses **9** angeordnet. Ein Anwender kann den Bohrhammer **1** mittels eines Handgriffs **10** führen, welcher an dem Maschinengehäuse **9** befestigt ist. Der Motor **5** und damit der Bohrhammer **1** können mittels eines Systemschalters **11** in Betrieb genommen werden. Im Betrieb dreht der Bohrhammer **1** den Bohrer **4** kontinuierlich um eine Arbeitsachse **12** und kann dabei den Bohrer **4** in Schlagrichtung **13** längs der Arbeitsachse **12** in einen Untergrund schlagen.

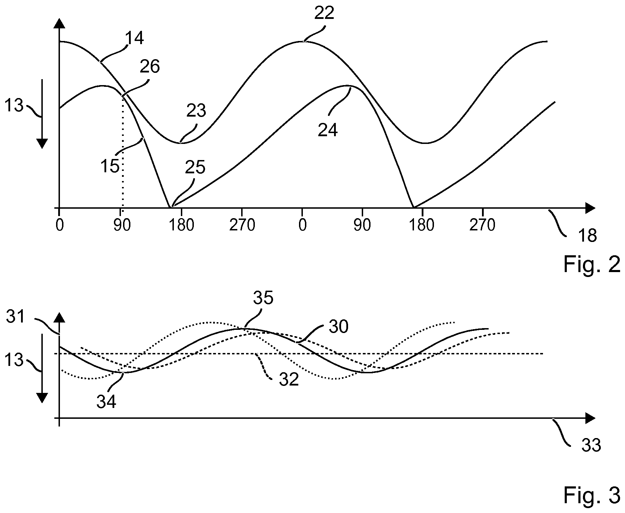

Das pneumatische Schlagwerk **6** hat einen Erreger **14** und einen Schläger **15,** die in einem Führungsrohr **16** längs der Arbeitsachse **12** beweglich geführt sind. Der Erreger **14** und der Schläger **15** schließen zwischen sich eine pneumatische Kammer **17** ab. Der Erreger **14** wird von dem Motor **5** periodisch auf der Arbeitsachse **12** vor- und zurückbewegt. Die pneumatische Kammer **17** bildet eine Luftfeder, welche den Schläger **15** an die Bewegung des Erregers **14** anbinden. Fig. 2 zeigt schematisch die periodischen Bewegungen von Erreger **14** und Schläger **15** über die Zeit bzw. Phase **18.** Die Periodendauer ist durch die erzwungene Bewegung des Erregers **14** vorgeben. Eine Motorsteuerung **19** regelt die Drehzahl des Motors **5** auf einen Sollwert. Die Drehzahl gibt die Periodendauer vor. Der Sollwert der Drehzahl ist in Hinblick auf eine effiziente pneumatische Kopplung des Schlägers **15** an den Erreger **14** ausgelegt. Die Schlagzahl des Schlagwerks **6** ist das Inverse der Periodendauer und liegt typischerweise im Bereich zwischen 10 Hz und 100 Hz.

Die Drehbewegung des Motors **5** wird durch eine Getriebeeinheit **20** in die lineare Bewegung für den Erreger **14** übertragen. Beispielsweise beinhaltet die Getriebeeinheit ein Exzenterrad **20** und ein Pleuel **21,** welche den Motor **5** an den Erreger **14** anbinden. Die Getriebeeinheit **20** kann auch auf einem Taumelring basieren. Die lineare Bewegung des Erregers **14** ist weitgehend harmonisch oder sinusförmig mit der festen Periodendauer. Der Erreger **14** oszilliert zwischen einem werkzeugfernen Totpunkt **22** und einem werkzeugnahen Totpunkt **23.**

Der Erreger **14** und der Schläger **15** sind als Kolben ausgeführt und schließen zwischen sich die pneumatische Kammer **17** ab. Der Schläger **15** oszilliert längs der Arbeitsachse **12** zwischen zwei Wendepunkten **24, 25.** Kurz auf den werkzeugfernen Wendepunkt **24** folgt der Kompressionspunkt **26,** bei welchem Erreger **14** und Schläger **15** die pneumatische Kammer **17** maximal komprimieren. Der Kompressionspunkt **26** kann zwischen 95 Grad und 110 Grad auf den werkzeugfernen Totpunkt **22** des Erregers **14** folgen. In dem werkzeugnahen Wendepunkt **25** (Schlagpunkt) schlägt der Schläger **15** auf den Bohrer **4** oder einen Döpper **27** auf. Die Bewegung des Schlägers **15** ist stark anharmonisch, insbesondere in dem Schlagpunkt **25.** Die Energieübertragung von dem Erreger **14** auf den Schläger **15** erfolgt nur über die pneumatische Kammer **17.** Für eine effiziente Energieübertragung ist die Periodendauer des Erregers **14** auf die anderen Parameter des Schlagwerks, wie z.B. Masse des Schlägers **15,** Volumen der pneumatischen Kammer **17,** in engen Grenzen abgestimmt.

Die periodischen Bewegungen des Erregers **14** und des Schlägers **15** prägen Vibrationen in das Maschinengehäuse **9** ein, welche sich auf den Handgriff **10** übertragen. Der Anwender spürt insbesondere die Beschleunigung des Schlägers **15** im Kompressionspunkt **26.**

Ein Tilger **28** in dem Maschinengehäuse **9** verringert die Amplitude der Vibrationen. Der Tilger **28** hat einen an einer oder mehreren Federn **29** aufgehängten Schwinger **30.** Die Trägheit des Schwingers **30** bewirkt eine relative Bewegung des Schwingers **30** gegenüber dem vibrierenden Maschinengehäuse **9.** Die periodischen Vibrationen des Schlagwerks **6** längs der Arbeitsachse **12** führen zu einer periodischen Auslenkung **31** des Schwingers **30** relativ zu einer Ruhelage **32** in dem Maschinengehäuse **9.** Nur die Federn **29** koppeln den Schwinger **30** an das Maschinengehäuse **9** an und üben auf den Schwinger **30** bei einer Auslenkung **31** eine in die Ruhelage **32** rückstellende Kraft aus. Die angeregte periodische Auslenkung **31** des Schwingers **30** ist über die Zeit bzw. Phase **33** der Bewegung in Fig. 3 dargestellt. Der Schwinger **30** oszilliert zwischen einem werkzeugnahen Umkehrpunkt **34** und einem werkzeugfernen Umkehrpunkt **35.** Die Periodizität ist gleich der Schlagfrequenz der periodischen Anregung. Die Amplitude der Auslenkung **31** ist abhängig von der Amplitude der Vibrationen und der Schlagfrequenz.
Der beispielhafte Tilger **28** hat einen in einem Linearlager längs einer Achse **36** geführten Schwinger **30.** Die Achse **36** ist parallel mit der Arbeitsachse **12**. Die Federn **29** sind beispielsweise Schraubenfedern mit denen der Schwinger **30** sich längs der Achse **36** an dem Maschinengehäuse **9** abstützt. Ein alternativer , nicht-erfindungsgemäßer Tilger **28** hat einen auf einer gebogenen Bahn geführten Schwinger. Der Schwinger ist über einen Pendelarm an dem Maschinengehäuse **9** aufgehängt. Der Pendelarm ist eine Biegefeder, die senkrecht zu der Arbeitsachse angeordnet ist.
Der schwingende Tilger **28** bewirkt eine Reduktion der auf den Handgriff **10** übertragengen Vibrationen. Die Reduktion erfolgt nicht durch eine dissipative Wirkung des Tilgers **28.** Vielmehr bildet der Tilger **28** mit dem Schlagwerk **6** ein zusammenhängendes schwingendes System mit einem Schwingungsknoten. Das System ist so abgestimmt, dass der Anbindungspunkts des Systems an das Maschinengehäuse **9** bzw. den Handgriff **10** mit dem Schwingungsknoten zusammenfällt. Die optimale Reduktion wird erreicht, wenn die Schlagfrequenz gleich der Eigenfrequenz des Tilgers **28** ist. Die Eigenfrequenz ist die Frequenz mit welcher der Tilger **28** nach einmaliger Auslenkung ohne weitere Anregung schwingt. Die Eigenfrequenz ist durch die Masse des Schwingers **30** und die Steifigkeit der Federn **29** vorgeben.
Der Tilger **28** hat eine Dämpfregelung **37,** welche die Drehzahl des Motors **5** verändert, um die Reduktion der Vibrationen durch den Tilger **28** zu optimieren. Die Dämpfregelung **37** erfasst die Phase **18** der Bewegung des Schlagwerks **6** mit einem ersten (Schlagwerks-) Sensor **38** und die Phase **33** der Bewegung des Schwingers **30** mit einem zweiten (Tilger-) Sensor **39.** Aus der Differenz der Phasen **18, 33** ermittelt die Dämpfregelung **37** ein Stellsignal, welches den Sollwert für die Drehzahl des Motors **5** ändert. Der Sollwert wird so angepasst, dass der Kompressionspunkt **26** des Schlagwerks **6** und der werkzeugnahe Umkehrpunkt **34** des Tilgers **28** zeitlich zusammenfallen. Beispielsweise wird die Drehzahl erhöht, wenn der Schläger **15** den Kompressionspunkt **26** zu spät erreicht, entsprechend wird die Drehzahl verringert, wenn der Schläger **15** den Kompressionspunkt **26** zu früh erreicht.

Die Bewegung der Getriebeeinheit **20,** des Erregerkolbens **14** und des Schlägers **15** sind miteinander in bekannter Weise gekoppelt, wie z.B. in Fig. 2 dargestellt. Aus der Stellung und Bewegungsrichtung einer der bewegten Komponenten des Schlagwerks **6** kann unmittelbar auf die Stellung und Bewegungsrichtung der anderen bewegten Komponenten geschlossen werden. Beispielsweise kann die unmittelbare Bestimmung der Phase **33** des Kompressionspunkts **26** ungeeignet sein. Aus der Auslegung des Schlagwerks **6** oder empirisch ermittelt ist die Phasendifferenz zwischen dem Kompressionspunkt **26** und der werkzeugabgewandten Totpunkt **22** des Erregers **14** bekannt, welcher beispielsweise zwischen 95 Grad und 110 Grad sein kann.

Der Schlagwerkssensor **38** kann beispielsweise die Winkelstellung des Exzenterrads **20** erfassen. Das Exzenterrad **20** kann mit einem Magnet versehen sein, der den als Hallsensor **40** ausgebildeten Schlagwerkssensor **38** einmal pro Umlauf passiert. Der Hallsensor **40** erzeugt beim Passieren des Magnets einen Schaltpuls. Der Schaltpuls synchronisiert einen verstimmbaren Oszillator auf die Drehzahl des Exzenterrads **20,** z.B. mit einer Phasenregelschleife. Die Frequenz des Oszillators liegt beispielsweise im Bereich zwischen dem 50-fachen und 200-fachen der Schlagzahl. Der Oszillator hat beispielsweise eine zu der Drehzahl die 72-fache Frequenz, um die Phase des Exzenterrads **20** und damit die Phase des Schlagwerks **6** in 5 Grad Schritten aufzulösen. Der Magnet und der Hallsensor sind ein Beispiel für vielfältige bekannte, vorzugsweise berührungslose, Sensoren, die zum Erfassen der Winkelstellung des Exzenterrads **20** genutzt werden können.

Der Schlagwerkssensor **38** kann beispielsweise eine bestimmte Stellung des Schlägers **15** erfassen, z.B. dass der Schläger **15** im Schlagpunkt ist. Beispielsweise beinhaltet der Schlagwerkssensor **38** eine stromdurchflossene Magnetspule **41,** die an dem Führungsrohr **16** angeordnet ist, beispielsweise nahe dem Schlagpunkt. Der Stromfluss in der Magnetspule **41** ändert sich, wenn der stählerne Schläger **15** in die Magnetspule **41** eintaucht. Der erzeugte Strompuls wird dem Oszillator zugeführt, um die Phase in feineren Schritten aufzulösen. Anstelle des induktiven Sensors **41** können gleichermaßen andere berührungslose Sensoren verwendet werden. Alternativ können auch Kontaktsensoren verwendet werden, welche von dem Schläger **15** mechanisch betätigt werden. Eine bestimmte Stellung des Erregers **14** kann ebenso über berührungslose Sensoren ermittelt werden und daraus die Phase des Schlagwerks **6** abgeleitet werden.

Der Schlagwerkssensor **38** kann einen Beschleunigungssensor **42** oder akustischen Sensor beinhalten. Der Beschleunigungssensor **42** erfasst die Beschleunigungen des Schlagwerks **6** oder des Maschinengehäuses **9.** Die Beschleunigungen treten im laufenden Betrieb insbesondere im Kompressionspunkt auf, wenn der Erreger **14** den Schläger **15** in Schlagrichtung **13** beschleunigt. Der akustische Sensor erfasst den Aufschlag des Schlägers **15** auf den Döpper **27** oder das Werkzeug. Die entsprechenden Signale der Sensoren **42** können dem Oszillator zugeführt werden, um die Phase in feineren Schritten aufzulösen. Die Sensoren **42** können vorteilhaft entfernt von dem Schlagwerk **6** und des Exzenterrads **20,** z.B. in der Motorsteuerung **19,** integriert sein.

Der Tilgersensor **39** erfasst beispielsweise eine bestimmte Stellung des Schwingers **30,** z.B. dass der Tilger **28** gerade die Ruhestellung durchläuft. Der Schwinger **30** kann mit einem Magnet versehen sein, der Tilgersensor **39** beinhaltet beispielsweise einen Hallsensor **43.** Dem Hallsensor **43** ist ein verstimmbarer Oszillator nachgeschaltet, welcher sich auf die Signale des Hallsensors **43** synchronisiert. Die Frequenz des Oszillators liegt vorzugsweise im Bereich zwischen dem 50 bis 200-fachen der Schlagzahl, um die Phase des Tilgers **28** mit einer höheren Auflösung zu bestimmen.

Der Tilgersensor **39** kann die Auslenkung **31** des Schwingers **30** erfassen. Die Auslenkung **31** kann beispielsweise mit einem ortsauflösenden Hallsensor **44** ermittelt werden. Der Oszillator kann beispielsweise zum Ermitteln der Phase auf das Erreichen der Wendepunkte der Bewegung synchronisiert werden. Der Tilgersensor **39** kann auch die Geschwindigkeit des Schwingers **30** erfassen, z.B. mittels eines induktiven Sensors. Der Tilgersensor **39** kann die Phase auf das Erreichen der maximalen Geschwindigkeit, d.h. den Durchgang der Ruhelage **32,** oder das Abfallen der Geschwindigkeit auf Null, d.h. in den Wendepunkten, referenzieren.

Der Schlagwerkssensor **38** übermittelt die Phase **18** des Schlagwerks **6** und der Tilgersensor **39** übermittelt die Phase **33** des Tilgers **28** an die Dämpfregelung **37.** Die Schwingungszahl des Tilgers **28** ist aufgrund der Anregung des Schwingers **30** durch das Schlagwerk **6** gleich der Schlagzahl. Die Phase **18** des Schlagwerks **6** zu der Phase **33** des Tilgers **28** ist unter Anderem von dem Unterschied der Schlagzahl zu der Eigenfrequenz des Tilgers **28** abhängig. Der Dämpfregelung **37** erzeugt ein Stellsignal aus der Differenz der Phasen **18, 33.** Das Stellsignal wird der Motorsteuerung **19** zugeführt, welche ansprechend auf das Stellsignal den Sollwert für die Drehzahl ändert. Der Sollwert wird erhöht, wenn die Phase **33** des Tilgers **28** der Phase des Schlagwerks **6** vorauseilt. Der Sollwert wird soweit angepasst, dass der Phasenunterschied einen Schwellwert unterschreitet. Lastwechsel, insbesondere beim Bohren, führen zu kurzzeitigen Drehzahlschwankungen des Motors **5,** bis der Motor **5** den Sollwert wieder erreicht. Der Schwellwert kann entsprechend gewählt werden und liegt beispielsweise bei 30 Grad. Der Sollwert wird vorzugsweise nur in einem Fenster variiert.

Das Fenster liegt zwischen 95 % und 105 % einer für den optimalen Betrieb des Schlagwerks **6** ausgelegten Drehzahl. Die Dämpfregelung **37** kann ein Fehlersignal ausgeben, wenn der Phasenunterschied nicht auf Null ausregelbar ist.
Die Motorsteuerung **19** unterdrückt das Stellsignal der Dämpfregelung **37,** wenn das Schlagwerk **6** bei drehendem Motor **5** inaktiv ist. Das Schlagwerk **6** wird beispielsweise deaktiviert, wenn ein Anpressdruck des Bohrers **4** fehlt. Der Schläger **15** kann über den Schlagpunkt **25** hinausgleiten. Dabei werden Belüftungsöffnungen freigeben, welche einen Luftaustausch der pneumatischen Kammer **17** mit der Umgebung ermöglichen. Die Ankopplung des Schlägers **15** an den Erreger **14** bricht zusammen, und der Schläger **15** ruht trotz des vor- und zurückbewegten Erregers **14.** Ein Erfassen des inaktiven Schlagwerks **6** kann beispielsweise in der absinkenden Leistungsaufnahme des Motors **5** erkannt werden.

## Patentansprüche

1. Handwerkzeugmaschine mit
einem Werkzeughalter (2) zum Haltern eines Werkzeugs (4) auf einer Arbeitsachse, einem Schlagwerk (6), das einen mit einer Schlagzahl periodisch mit einer Schlagzahl auf der Arbeitsachse (12) zwischen einem werkzeugnahen Wendepunkt und einem werkzeugfernen Wendepunkt bewegten Schläger (15) aufweist,
einer Antriebssteuerung (19) des Schlagwerks (6), das die Schlagzahl auf einen Sollwert regelt,
einem Tilger (28), der einen längs der Arbeitsachse (12) um eine Ruhelage (32) beweglichen Schwinger (30) und ein oder mehrere den Schwinger (30) in die Ruhelage (32) rücktreibende Federn (29) aufweist,
einem Sensor (39) zum Ermitteln einer ersten Phase (18) eines Kompressionspunkts (26) des Schlagwerks (6),
einem Sensor (39) zum Ermitteln einer zweiten Phase (33) eines werkzeugnahen Umkehrpunkts (34) des Tilgers (28),
**gekennzeichnet durch**
eine Dämpfregelung (37), die den Sollwert derart anpasst, dass eine Phasendifferenz zwischen der ersten Phase (18) und der zweiten Phase (33) geringer als ein Schwellwert ist, indem der Sollwert erhöht wird, wenn die erste Phase (18) der zweiten Phase (33) nacheilt, und der Sollwert verringert wird, wenn die erste Phase (18) der zweiten Phase (33) vorauseilt.

2. Handwerkzeugmaschine nach Anspruch 1, **gekennzeichnet durch** einen drehzahlgeregelten Motor (5), der das Schlagwerk (6) antreibt.

3. Steuerungsverfahren für eine Handwerkzeugmaschine nach einem der vorhergehenden Ansprüche mit den Schritten:
Ermitteln einer ersten Phase (18) eines Kompressionspunkts (26) des Schlagwerks (6),
Ermitteln einer zweiten Phase (33) eines werkzeugnahen Umkehrpunkts (34) des Tilgers (28),
**gekennzeichnet durch** den Schritt:
Anpassen des Sollwerts der Schlagzahl derart, dass eine Phasendifferenz zwischen der ersten Phase (18) und der zweiten Phase (33) geringer als ein Schwellwert ist, indem der Sollwert erhöht wird, wenn die erste Phase (18) der zweiten Phase (33) nacheilt, und der Sollwert verringert wird, wenn die erste Phase (18) der zweiten Phase (33) vorauseilt.

## Claims

1. Hand-held power tool comprising
a tool holder (2) for supporting a tool (4) on a working axis,
a striking mechanism (6) having a striker (15) moved periodically at an impact rate along the working axis (12) between a turning point close to the tool and a turning point remote from the tool,
a drive controller (19) of the striking mechanism (6) that adjusts the impact rate to a desired value,
an absorber (28) having an oscillator (30) movable along the working axis (12) about a rest position (32) and one or more springs (29) driving the oscillator (30) back into the rest position (32),
a sensor (39) for determining a first phase (18) of a compression point (26) of the striking mechanism (6) and
a sensor (39) for determining a second phase (33) of a reversal point (34) of the absorber (28) close to the tool,
**characterised by**
a damping controller (37) that adapts the desired value in such a manner that the phase difference between the first phase (18) and the second phase (33) is smaller than a threshold value by increasing the desired value when the first phase (18) lags behind the second phase (33) and reducing the desired value when the first phase (18) is ahead of the second phase (33).

2. Hand-held power tool according to claim 1, **characterised by** a speed-controlled motor (5) that drives the striking mechanism (6).

3. Control method for a hand-held power tool according to one of the preceding claims, comprising the steps:
determining a first phase (18) of a compression point (26) of the impact mechanism (6) and
determining a second phase (33) of a reversal point (34) of the absorber (28) close to the tool,
**characterised by** the step:
adapting the desired value of the impact rate in such a manner that the phase difference between the first phase (18) and the second phase (33) is smaller than a threshold value by increasing the desired value when the first phase (18) lags behind the second phase (33) and reducing the desired value when the first phase (18) is ahead of the second phase (33).

## Revendications

1. Machine-outil manuelle comportant :
un porte-outil (2) pour maintenir un outil (4) sur un axe de travail,
un mécanisme de percussion (6) comportant un percuteur (15) animé d'un mouvement périodique avec un nombre de percussions sur l'axe de travail (12) entre un point de changement de direction proche de l'outil et un point de changement de direction éloigné de l'outil,
une commande d'entraînement (19) du mécanisme de percussion (6) fixant le nombre de percussions à une valeur de consigne,
un amortisseur (28) comportant un oscillateur (30) se déplaçant le long de l'axe de travail (12) autour d'une position de repos (32) et un ou plusieurs ressorts (29) entraînant l'oscillateur (30) en arrière dans la position de repos (32),
un capteur (39) pour déterminer une première phase (18) d'un point de compression (26) du mécanisme de percussion (6),
un capteur (39) pour déterminer une seconde phase (33) d'un point d'inversion de l'amortisseur (28) proche de l'outil (34),
**caractérisée par**
une commande d'amortissement (37) qui adapte la valeur de consigne de sorte qu'une différence de phase entre la première phase (18) et la seconde phase (33) est inférieure à une valeur de seuil, la valeur de consigne étant augmentée lorsque la première phase (18) est en retard sur la seconde phase (33) et la valeur de consigne étant réduite lorsque la première phase (18) est en avance sur la seconde phase (33).

2. Machine-outil manuelle selon la revendication 1, **caractérisée par** un moteur (5) à vitesse de rotation régulée qui entraîne le mécanisme de percussion (6).

3. Procédé de commande pour une machine-outil manuelle selon l'une des revendications précédentes, comportant les étapes consistant à :
déterminer une première phase (18) d'un point de compression (26) du mécanisme de percussion (6),
déterminer une seconde phase (33) d'un point d'inversion (34) de l'amortisseur (28) proche de l'outil (34),
**caractérisé par** l'étape consistant à :
adapter la valeur de consigne au nombre de percussions, de sorte qu'une différence de phase entre la première phase (18) et la seconde phase (33) est inférieure à une valeur de seuil, la valeur de seuil étant augmentée lorsque la première phase (18) est en retard sur la seconde phase (33), et la valeur de consigne étant réduite lorsque la première phase (18) est en avance sur la seconde phase (33).
